# EUROPÄISCHE PATENTANMELDUNG

(11) **EP 2 149 475 A1**
(43) Veröffentlichungstag der Anmeldung: **03.02.2010**
(21) Anmeldenummer: 09157116.6
(22) Anmeldetag: 01.04.2009
(51) Int. Cl.: B60N 2/44, B29C 44/04

(54) **Sitz mit Formeinrichtung zur Verstellung der Sitzkontur**

(30) Priorität: 01.08.2008 DE 102008035930
(71) Anmelder: Alfmeier Präzision AG Baugruppen und Systemlösungen, 91757 Treuchtlingen (DE)
(72) Erfinder: Maier, Lothar, 91788 Pappenheim (DE); Wägemann, Katrin, 91781, Weißenburg (DE)
(74) Vertreter: Mörtel & Höfner

(57) **Zusammenfassung**

Bei einem Sitz (20) mit einem einer Sitzfläche (13) zugeordneten Polsterkörper (3), und einer verformend auf den Polsterkörper (3) zur Verstellung der Sitzkontur der Sitzfläche (13) einwirkenden Formeinrichtung (22), ist mindestens eine Komponente (28) der Formeinrichtung (22) zumindest teilweise in den Polsterkörper (3) eingebettet.

## Beschreibung

Die Erfindung betrifft einen Sitz mit einer Formeinrichtung zur Verstellung der Sitzkontur. Derartige Sitze werden beispielsweise im Wohnbereich oder im Kraftfahrzeugbereich eingesetzt. Die Sitzkonturverstellung dient z.B. dazu, eine benutzerdefinierte Formung des Sitzkissens und der Lehne des Sitzes herzustellen, eine Stützung des Lordosenbereiches der Wirbelsäule zu ermöglichen oder eine Massagefunktion bereitzustellen. Herkömmlicherweise sind derartige Sitze so aufgebaut, dass hinter einem Polsterkörper, der im Sitzflächenbereich oder im Lehnenbereich angeordnet ist, eine Tragstruktur an einem Sitzrahmen verspannt wird. Zur Konturverstellung sind zwischen dieser Tragstruktur und dem Polsterkörper aufblasbare Kissen angeordnet. Um eine Verletzung des Kissens an der Tragstruktur zu verhindern, ist meist noch eine Schutzschicht zwischen diesem und der Tragstruktur vorhanden.

Aufgabe der Erfindung ist es, einen Sitz mit einem alternativen Aufbau vorzuschlagen.

Die Aufgabe wird gelöst durch einen Sitz gemäß Patentanspruch 1. Ein solcher Sitz weist eine Sitzfläche auf. Der Sitzfläche ist ein Polsterkörper zugeordnet. Die Sitzfläche ist also durch den Polsterkörper gepolstert, so dass ein Benutzer, der mit der Sitzfläche in Kontakt kommt, angenehmer an der Sitzfläche anliegt. Der Sitz umfasst weiterhin eine Formeinrichtung. Diese wirkt verformend auf den Polsterkörper ein. Durch die Formeinrichtung wird also die Sitzkontur des Sitzes im Bereich der Sitzfläche verstellt. Gemäß der Erfindung ist mindestens eine Komponente der Formeinrichtung zumindest teilweise in den Polsterkörper eingebettet.

Eine solche Komponente kann z.B. ein zum Formeinrichtung gehörender Schlauch, ein Rohr, eine Pumpe, ein Motor oder eine Steuerung sein. Der Polsterkörper dient dabei also zur Aufnahme und/oder zur Halterung der Komponente. Das Einbetten kann beispielsweise bewerkstelligt werden, indem der Polsterkörper um die Komponente herum gefertigt bzw. hergestellt wird. So kann z.B. bei der Herstellung des Polsterkörpers die entsprechende Komponente mit einem für Polstermaterial üblichen Schaum, beispielsweise PU-Schaum (Polyurethan) umschäumt werden. Der PU-Schaum bildet dann selbst den Polsterkörper.

In einer vorteilhaften Ausführungsform ist die Komponente vollständig in den Polsterkörper eingebettet. Mit anderen Worten ist die Komponente vollständig vom Polsterkörper umgeben. Die Komponente ist so noch besser im Polsterkörper gehalten bzw. aufgenommen.

Um die Halterung der Komponente im Polsterkörper noch zu verbessern, weist in einer vorteilhaften Ausführungsform der Polsterkörper in einem ersten Bereich, der die Komponente umgibt, eine höhere Festigkeit bzw. Steifigkeit auf als in einem zweiten Bereich. Mit anderen Worten ist der Polsterkörper in der Umgebung der Komponente, also im die Komponente umfassenden Bereich, stabiler ausgeführt als in seinen umgebenden Bereichen.

In einer Ausgestaltung dieser Ausführungsform ist der Polsterkörper ein Schaumkörper und im ersten Bereich kleinzelliger bzw. feinporiger ausgeführt, um die erhöhte Festigkeit bzw. Stabilität zu erreichen.

In einer bevorzugten Ausführungsform der Erfindung ist die Komponente ein formveränderbares Formelement, welches letztendlich für die Formänderung, also die Konturverstellung verantwortlich ist. In der Regel ist ein solches Formelement mit Hilfe von Druckluft aufblasbar, um seine Außenkontur zu verändern und diese Konturveränderung an die Sitzfläche weiterzugeben. Als Formelemente kommen allgemein solche Körper bzw. Elemente in Frage, die z.B. mit Hilfe von Druckluft expandierbar sind und die sich bei Druckentlastung wieder verkleinern, etwa wieder in ihre ursprüngliche Form übergehen.

Das Formelement ist im einfachsten Fall ein mit einem Medium, z.B. Luft, befüllbarer Hohlraum. Die Vorderseite, also die dem Nutzer zugewandte Seite des Sitzes bzw. der Sitzfläche wird durch Befüllen des Hohlraums mit dem Medium - z.B. über eine geeignete Pneumatikpumpe - in die gewünschte Form gebracht.

In einer bevorzugten Ausgestaltung ist also das Formelement in Form eines im Polsterkörper eingebetteten Hohlraums realisiert. Der Polsterkörper ist dabei so ausgeführt, dass die den Hohlraum umgebende Fläche eine für das Füllmedium, also z.B. Luft, undurchlässige Schicht aufweist bzw. bildet. Diese Schicht ist in einer ersten Variante in Form einer Beschichtung des Polsterkörpers bewusst eingebracht. Dies kann z.B. durch Umschäumen einer die Schicht bildenden Blase aus geeignetem Material erfolgen. In einer anderen Variante wird die Schicht derart realisiert, dass sich nach dem Schäumen des Polsterkörpers an der Grenze zum Hohlraum die Schicht in Form einer luftundurchlässigen "Haut" ausbildet, also mit anderen Worten an der Außengrenze des Polsterkörpers zum Hohlraum hin automatisch entsteht.

Der Hohlraum im Polsterkörper ist damit so ausgestaltet, dass sich sein Volumen im unbefüllten Zustand auf ein Nullvolumen reduziert. Die am Hohlraum angrenzenden bzw. diesen bildenden Innenflächen des Polsterkörpers berühren sich dann. Der Hohlraum ist also ein echter Hohlraum, der außer dem Füllmedium nichts beinhaltet. Im unbefüllten Fall ergibt sich so für einen Benutzer des Sitzes das gleiche Sitzgefühl wie auf einem Sitz mit Polsterkörper ohne Hohlraum.

Es können beliebige Formkörper verwendet werden. In einer bevorzugten Variante sind solche Formkörper von Bedeutung, die sich mit Hilfe von Druckluft oder einem anderem Medium expandieren lassen. In einer weiteren Ausführungsform kommen als die Sitzkontur verändernde aufblasbare Formelemente z.B. aus dem Kraftfahrzeugbereich bekannte, mit einem Medium befüllbare, d.h. dadurch konturveränderte, Blasen zum Einsatz.

In einer bevorzugten Variante ist die Blase ein von einer mediendichten Außenhaut umgebener Füllkörper. Der Füllkörper selbst ist flexibel expandierbar. Im Gegensatz zu einer leeren Blase besitzt der Füllkörper selbst bereits eine Eigenstabilität. Auch im druckentlasteten Zustand der Blase, wenn also z.B. Luft aus dem Formkörper abgelassen wurde, übernimmt dieser eine Stütz- und Polsterfunktion.

Der die Blase bildende Hohlraum ist damit so ausgestaltet, dass er auch im entleerten bzw. nicht mit Druck beaufschlagten Zustand einen echten Hohlraum bildet - also ein von Null verschiedenes Volumen aufweist. Der Hohlraum ist hierbei - z.B. mit einem geeigneten Gewirke - so auszufüllen, dass sich die Elastizität, also die Federung bzw. Federkonstante des Sitzes im Bereich des Hohlraums nicht von der Elastizität des restlichen Polsterkörpers unterscheidet. So wird vermieden, dass ein Sitzbenutzer bei ungefülltem Hohlraum in dessen Bereich keine Unterstützung erfährt, der Benutzer also mit anderen Worten an der Stelle des Hohlraums ein "Loch" fühlt.

In einer weiteren Ausführungsform weist der Füllkörper verbundene Hohlräume auf. Der Füllkörper ist dann in bevorzugter Weise ein Schaumstoffkörper aus offenzelligem Schaumstoff oder ein beliebig anderer flexibler Körper mit einer ähnlichen, verbundene Hohlräume aufweisenden Struktur. Die miteinander in Verbindung stehenden Hohlräume bzw. Zellen gewährleisten, dass sich in den Füllkörper bzw. die Blase zugeführtes Medium, z.B. Druckluft verteilt und diesen bzw. die gesamte Blase expandiert. Natürlich muss, um ein Entweichen der Luft zu verhindern, ein solcher Schaumstoffkörper von einer Luftdichten Außenhaut umfasst sein. Die Außenhaut bildet im Prinzip die Blase. Im Gegensatz zu herkömmlichen Sitzblasen ist diese aber innen nicht hohl, sondern gefüllt mit z.B. Schaummaterial.

Ist der Füllkörper z.B. - wie der Polsterkörper - ein Schaumstoffkörper, kann als Material für das Formelement ein solches verwendet werden, das gegenüber dem Polsterkörper andere elastische Eigenschaften aufweist.

Beim Befüllen einer Blase bzw. eines aufblasbaren Kissens dehnt sich das Formelement in der Regel nach allen Seiten aus: Es wölbt sich damit nicht nur zur Sitzfläche hin vor, sondern auch zur entgegengesetzten Seite. Dort verliert sich die Wirkung nutzlos in der Sitzstruktur bzw. im Polsterkörper. Für einen bestimmten Vorhub bzw. eine gewünschte Auswölbung der Sitzfläche muss daher eine größere Luftmenge als erforderlich aufgebracht werden.

Spricht man nun von einem dritten Bereich des Polsterkörpers, der zwischen Formkörper und Sitzfläche liegt, und von einem vierten Bereich, der - von der Sitzfläche aus gesehen - hinter dem Formkörper liegt, so gilt: In einer vorteilhaften Ausführungsform weist der Polsterkörper in einem bezüglich des Formkörpers der Sitzfläche abgewandten dritten Bereich eine größere Festigkeit bzw. Steifigkeit auf als in einem der Sitzfläche zugewandten vierten Bereich. Mit anderen Worten ist der der Sitzfläche abgewandte Teil des Polsterkörpers, der also wie oben ausgeführt, "hinter" diesem liegt, stabiler ausgeführt. Dieser vierte Bereich stützt den Formkörper ab, so dass sich dieser beim Befüllen im Wesentlichen nur nach "vorne", also zur Sitzfläche hin vorwölbt.

Mit anderen Worten weist der an der Rückseite eines Formelementes vorhandene Bereich des Polsterkörpers eine größere Festigkeit und Steifigkeit auf als sein lehnen- oder sitzflächenseitiger Bereich.

Der gleiche Effekt lässt sich auch erzielen, wenn nicht nur der Polsterkörper den Formkörper stützt: In einer weiteren Ausführungsform weist daher der Polsterkörper im dritten Bereich ein Stützelement für das Formelement auf. Hier ist also ein zusätzliches Bauteil vorgesehen, welches die Stützfunktion - z.B. in Zusammenarbeit mit dem Formkörper - übernimmt.

In einer weiteren Ausführungsform erstreckt sich das Stützelement über den Formkörper hinaus. Dadurch kann eine bessere Verankerung des Stützelements innerhalb des Polsterkörpers oder an der Sitzstruktur erreicht werden. Das Formelement ist dann wirksamer abgestützt.

In einer alternativen Ausführungsform ist das Stützelement jedoch ein der Sitzfläche abgewandter Teil des Formelements. Mit anderen Worten ist das Stützelement integraler Teil des Formelements. Hier ist z.B. denkbar, dass der bezüglich der Sitzfläche rückseitige Folienzuschnitt einer Blase durch ein plattenförmiges stabiles, festes Stützelement ersetzt ist.

Dieses ist dem verbleibenden Folienabschnitt der Blase an dessen Rändern verbunden, beispielsweise damit verschweißt.

Die Erfindung wird nun unter Bezugnahme auf die beigefügten Zeichnungen näher beschrieben. Es zeigen:
- Fig. 1: als Beispiel eines Sitzes einen Sitz für ein Kraftfahrzeug,
- Fig. 2: den Sitz aus Fig. 1 in ausschnittsweiser Darstellung mit im Polsterkörper eingebetteten Komponenten der Formeinrichtung,
- Fig. 3: eine alternative Ausgestaltung des Sitzes aus Fig. 2 mit gefüllter Sitzblase,
- Fig. 4: den Sitz aus Fig. 3 mit durchgehendem Stützelement,
- Fig. 5: den Sitz aus Fig. 3 mit auf die Sitzblase begrenztem Stützelement,
- Fig. 6: den Sitz aus Fig. 3 mit zweiteiliger, nicht abgestützter Sitzblase bei Betätigung,
- Fig. 7: den Sitz aus Fig. 6 mit abgestützter Sitzblase,
- Fig. 8: den Sitz aus Fig. 3 mit Sitzblase mit integriertem Stützelement.

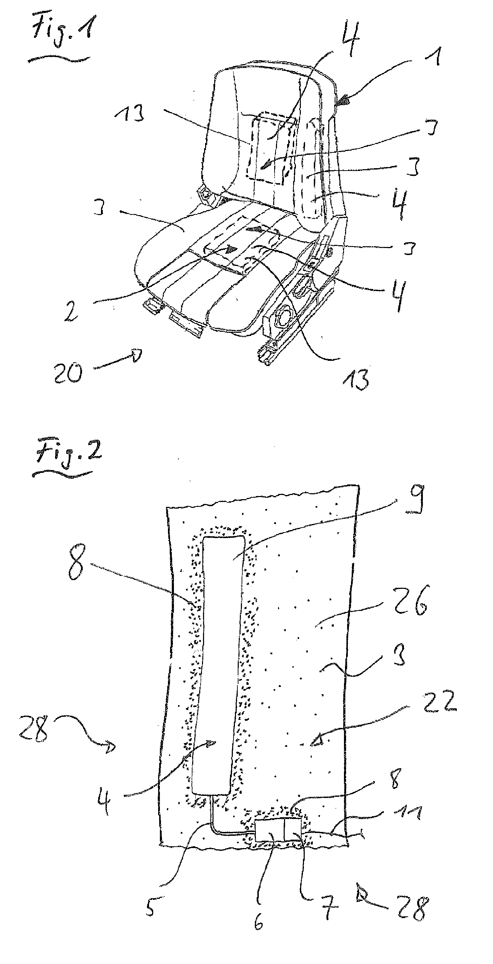

Fig. 1 zeigt als Sitz 20 einen üblichen Fahrzeugsitz mit einer Lehne 1 und einem Sitzteil 2. Die Lehne 1 und das Sitzteil 2 umfassen jeweils einen zentralen Polsterkörper 3. Außerdem sind weitere Polsterkörper 3 auch in seitlichen Bereichen der Lehne 1 und des Sitzteils 2 zum Zwecke eines verbesserten Seitenhalts für den Sitzbenutzer angeordnet. In einigen der Polsterkörper 3 sind Formelemente 4 integriert bzw. eingebettet. Diese sind durch Zu- und Abführen von Luft formveränderbar. So ist die gesamte Sitzfläche 13 in Form der Lehnenfläche und der eigentlichen Sitzfläche, mit der ein Benutzer des Sitzes 20 in Berührung kommt, in ihrer Form veränderbar.

Fig. 2 zeigt die Lehne 1 im Detail. Der Sitz 20 weist also eine Verstelleinrichtung bzw. Formeinrichtung 22 zu dessen Konturverstellung auf. Diese enthält neben den Formelementen 4 als Komponente 28 weitere solche, beispielsweise eine Rohr- bzw. Schlauchleitung 5 zum Zu- und Ableiten von Luft bzw. einem anderen Fluid in das Formelement 4, eine Pumpe 6 für die Luft, einen zum Antrieb der Pumpe 6 dienender Motor 7, sowie nicht dargestellte Steuer- und Regelelemente. Die elektrische ansteuernde bzw. sensorische Versorgung der Formeinrichtung 22 erfolgt über ein Kabel 11, das aus dem Polsterkörper 3 herausgeführt ist.

Fig. 2 zeigt als Formelement 4 eine herkömmliche Blase 9. Mehrere der o.g. Komponenten der Formeinrichtung 22 sind vollständig im Polsterkörper 3 eingebettet, also ringsum von diesem eingeschlossen. Die Blase 9, der Motor 7 sowie die Pumpe 6 sollen hierbei im Sitz 20 mechanisch besonders stabil gehalten sein.

Dies wird folgendermaßen erreicht: Im Polsterkörper 3 existiert ein die Komponenten unmittelbar umgrenzender Bereich 8 des Polsterkörpers 3. Dieser Bereich 8 (in Fig. 2 stärker schraffiert) weist eine größere Festigkeit auf als der restliche Bereich 26 des Polsterkörpers 3. Mit anderen Worten sind die Komponenten, im Beispiel das Formelement 4 und Motor 7 mit Pumpe 6, von einem festeren, dichteren, stabileren Bereich des Polsterkörpers 3 unmittelbar umgeben. Im Beispiel ist der Polsterkörper 3 ein Schaumstoff. Dieser ist im Bereich 8 dichter, stabiler und feinzelliger aufgebaut als im Bereich 26.

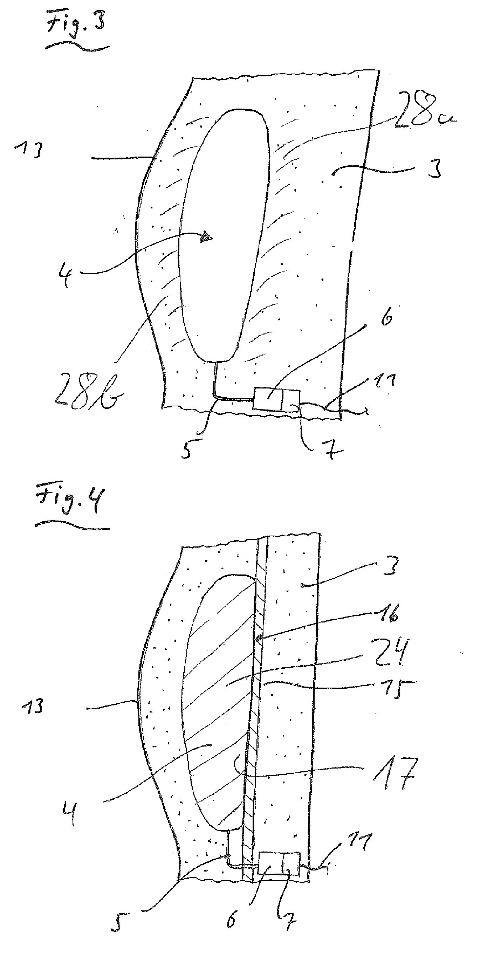

Fig. 3 zeigt eine alternative Ausführungsform. Hier ist das Formelement 4 und die weiteren Komponenten ohne verstärkte Bereiche 8 direkt in den Polsterkörper eingebettet. Es ist außerdem gezeigt, dass das Formelement gegenüber Fig. 2 mit mehr Druckluft gefüllt ist, so dass sein Volumen vergrößert ist. Die Sitzfläche 13 wölbt sich daher nach vorne, d.h. zu einem Benutzer hin, der auf dem Sitz 20 Platz nehmen würde. Dieser erfährt eine stärkere Unterstützung im Bereich des Formelements 4.

Beim Zuführen von Druckluft wölbt sich allerdings das Formelement 4 nicht nur zur Sitzfläche 13, sondern auch zur entgegengesetzten Seite, also zum der Sitzfläche 13 abgewandten, also "hinter" dem Formelement 4 liegenden Bereich 28a vor. Der Polsterkörper 3 wird in diesem Bereich verformt, was jedoch für die Auswirkung auf einen Benutzer sinn- bzw. nahezu wirkungslos ist. Hierdurch ist jedoch für einen bestimmten Vorhub- bzw. eine gewünschte Auswölbung der Sitzfläche 13 eine größere Luftmenge im Formelement 4 erforderlich als normalerweise aufgebracht werden müsste.

Fig. 3 zeigt hierzu eine weitere Ausführungsform eines Sitzes 20. Der an der Rückseite - bezogen auf die Sitzfläche 13 - des Formelementes 4 vorhandene Bereich 28a des Polsterkörpers 3 weist dann eine größere Festigkeit und Steifigkeit auf als der Sitzfläche 13 zugewandte Bereich 28b.

Fig. 4 zeigt eine weitere Variante eines Sitzes 20. Hier ist eine andere Möglichkeit gezeigt, das in Rede stehende Ziel zu erreichen: In den Polsterkörper 3 ist ein Stützelement 16 integriert bzw. darin eingebettet. Das Stützelement 16 ist dabei an der Rückseite 17 des Formelementes 4 angeordnet und verhindert, dass letzteres sich in der entsprechenden Richtung ausdehnen kann.

Das Stützelement 16 ist beispielsweise ein plattenförmiges Teil, das sich über den gesamten Polsterkörper 3 bzw. die gesamte Fläche des Sitzes 20 bzw. der Lehne 1 in Sitzquerrichtung erstreckt. Hier ist das Stützelement 16 also größer als das Formelement 4, erstreckt sich also über dieses hinaus. Dadurch kann eine gute Verankerung innerhalb des Polsterkörpers 3 bzw. an den Strukturen des Sitzes 20 bzw. der Lehne 1 erreicht werden. In einer alternativen Ausführungsform ist das Stützelement 16 aus mehreren Elementen zusammengesetzt, beispielsweise aus kreuzweise zueinander verlaufenden Leisten oder dergleichen.

In Fig. 4 ist außerdem das Formelement 4 nicht innen hohl, sondern mit einem Füllkörper 24 aus Schaumstoff gefüllt. Dieser ist mit der luftdichten Außenhaut des Formelements 4 verbunden und dehnt sich mit dieser aus. Selbst im vollständig von Druckluft entleerten Zustand besitzt das Formelement 4 so eine Eigenstabilität.

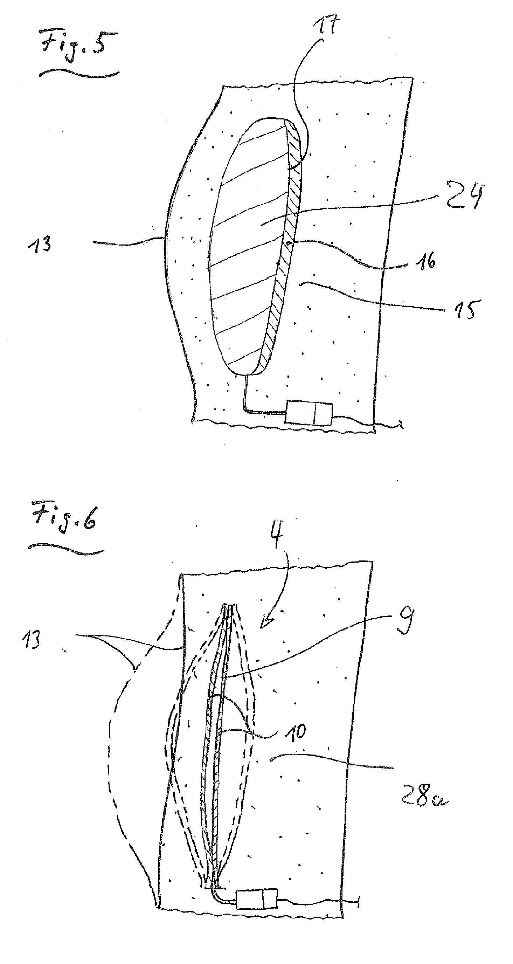

Bei dem in Fig. 5 gezeigten Ausführungsbeispiel erstreckt sich im Gegensatz zu Fig. 4 das Stützelement 16 nicht über den Polsterkörper 3, sondern ist auf das Formelement 4 begrenzt. Dies führt zu einer einfacheren Konstruktion des Sitzes 20 bei annähernd gleichem Effekt bezüglich der lediglich in Richtung zur Sitzfläche 13 hin erwünschten Ausdehnung.

In Fig. 5 besitzt außerdem der Füllkörper 24 eine andere elastische Eigenschaft als der Polsterkörper 3. Ersterer ist nämlich druckfester. Der Benutzer des Sitzes 20 erfährt daher auch bereits bei von Druckluft entleertem Formelement 4 im Bereich des Füllkörpers 24 eine festere Unterstützung als im restlichen Bereich der Sitzfläche 13.

Fig. 6 zeigt eine Ausführungsform, bei der das Formelement 4 eine herkömmlich für derartige Sitze 20 benutzte Blase 9 ist. Diese ist aus zwei Folienzuschnitten 10 hergestellt, die an ihren Rändern miteinander verbunden, z.B. verschweißt oder verklebt sind. Fig. 6 zeigt die zunächst entleerte Blase 9. Durch Befüllung mit Druckluft bläst sich diese auf (gestrichelt gezeichnet). Die Formveränderung tritt in die erwünschte Richtung zur Sitzfläche 13 hin auf. Unerwünscht ist die gleichzeitige Ausdehnung in Richtung der Seite des Bereichs 28a hin, die bezüglich der Blase 9 der Sitzfläche 13 abgewandt ist.

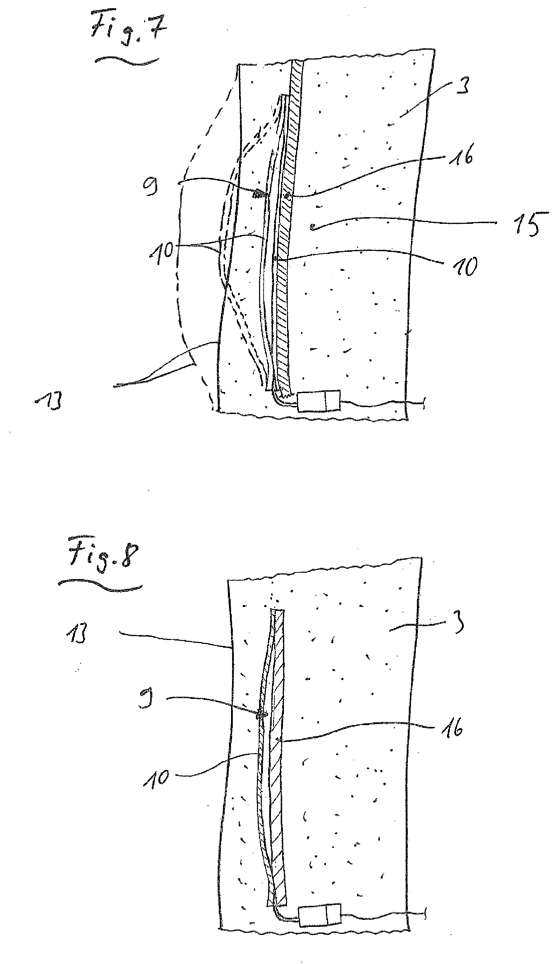

Fig. 7 zeigt daher wieder eine bezüglich der Sitzfläche 13 "hinter" der Blase 9 angeordnetes Stützelement 16 der oben beschriebenen Art. An diesem liegt die Blase 9 mit ihrem einen, rückseitigen Folienzuschnitt 10 an.

Fig. 8 zeigt eine Alternative, bei der der rückseitige Folienzuschnitt 10 durch das plattenförmige Stützelement 16 ersetzt ist, wobei dieses mit dem verbleibenden vorderseitigen Folienzuschnitt 10 an den Rändern verbunden, beispielsweise verschweißt ist. Das Stützelement 16 ist dann ein integrales Teil des Formelements 4, das der Sitzfläche 13 abgewandt ist.

## Patentansprüche

1. Sitz (20) mit einem einer Sitzfläche (13) zugeordneten Polsterkörper (3), und einer verformend auf den Polsterkörper (3) zur Verstellung der Sitzkontur der Sitzfläche (13) einwirkenden Formeinrichtung (22), bei dem mindestens eine Komponente (28) der Formeinrichtung (22) zumindest teilweise in den Polsterkörper (3) eingebettet ist.

2. Sitz (20) nach Anspruch 1, bei dem die Komponente (28) vollständig in den Polsterkörper (3) eingebettet ist.

3. Sitz (20) nach einem der vorhergehenden Ansprüche, bei dem der Polsterkörper (3) in einem die Komponente umgebenden ersten Bereich (8) eine höhere Festigkeit aufweist als in einem zweiten Bereich (26).

4. Sitz (20) nach Anspruch 3, bei dem der Polsterkörper (3) ein Schaumkörper ist, der im ersten Bereich (8) kleinzelliger als im zweiten Bereich (26) aufgebaut ist.

5. Sitz (20) nach einem der vorhergehenden Ansprüche, bei dem die eingebettete Komponente (28) ein formveränderbares Formelement (4) ist.

6. Sitz (20) nach Anspruch 5, bei dem die Komponente (28) eine mit einem Medium befüllbare Blase (9) ist.

7. Sitz (20) nach Anspruch 6, bei dem die Blase (9) ein von einer mediendichten Außenhaut umgebener, flexibel expandierbarer Füllkörper (24) ist.

8. Sitz (20) nach Anspruch 7, bei dem der Füllkörper (24) verbundene Hohlräume aufweist.

9. Sitz (20) nach Anspruch 7 oder 8, bei dem die Blase (9) eine andere elastische Eigenschaft aufweist als der Polsterkörper (3).

10. Sitz (20) nach einem der vorhergehenden Ansprüche, bei dem der Polsterkörper (3) in einem bezüglich des Formkörpers (3) der Sitzfläche (13) abgewandten dritten Bereich (28a) eine größere Festigkeit aufweist als in einem der Sitzfläche (13) zugewandten vierten Bereich (28b).

11. Sitz (20) nach Anspruch 10, bei dem der Polsterkörper (3) im dritten Bereich (28a) ein Stützelement (16) für das Formelement (4) aufweist.

12. Sitz (20) nach Anspruch 11, bei dem sich das Stützelement (16) über das Formelement (4) hinaus erstreckt.

13. Sitz (20) nach Anspruch 11 oder 12, bei dem das Stützelement (16) ein der Sitzfläche (13) abgewandter Teil des Formelements (4) ist.
